# EUROPÄISCHE PATENTSCHRIFT

(11) **EP 0 643 342 B1**
(45) Veröffentlichungstag und Bekanntmachung des Hinweises auf die Patenterteilung: **13.05.1998**
(21) Anmeldenummer: 94103733.5
(22) Anmeldetag: 11.03.1994
(51) Int. Cl.: G05B 19/4093, G05B 19/408

(54) **Verfahren zur Erstellung und/oder Änderung von NC-Programmen**
Method of creating and/or modifying a numerical control program
Procédé pour élaborer et/ou modifier un programme de commande numérique

(30) Priorität: 30.08.1993 DE 4329016
(43) Veröffentlichungstag der Anmeldung: 15.03.1995
(73) Patentinhaber: Dr. Johannes Heidenhain GmbH, D-83292 Traunreut (DE)
(72) Erfinder: Gühl, Wieland, Dipl.-Ing. (FH), D-83342 Tacherting (DE); Rutkowski, Christian, Dipl.-Phys., D-83278 Traunstein (DE)

(56) Entgegenhaltungen:
- DE-A- 3 234 426

## Beschreibung

Die Erfindung bezieht sich auf ein Verfahren zum Erstellen, Ändern und Bearbeiten eines NC-Programmes.

In der DE-A-32 34 426 ist ein Verfahren zum Eingeben von Bearbeitungsinformationen in eine numerisch gesteuerte Werkzeugmaschine und zum Anzeigen dieser Informationen an einem Bildschirm beschrieben. Dabei werden Bearbeitungsmuster eines Werkstückes in mehrere Bearbeitungseinheiten aufgeteilt. Die bei der Programmerstellung möglichen Bearbeitungseinheiten werden als Menü am Bildschirm angezeigt. Abhängig von der ausgewählten Bearbeitungseinheit wird ein weiteres Menü zur Eingabe von passenden Daten angezeigt. Bei diesem Verfahren wird der Bediener bei der Programmerstellung grafisch unterstützt. Die hierbei angezeigten Informationen finden sich nicht mehr im damit erstellten NC-Programm. Die Übersicht und Lesbarkeit eines NC-Programmes wird durch diese Maßnahme nicht erleichtert.

Die damit erstellten NC-Programme sind bei entsprechendem Umfang oft unübersichtlich.

Der Erfindung liegt daher die Aufgabe zugrunde, die Übersicht und die Lesbarkeit von NC-Programmen zu verbessern.

Diese Aufgabe wird mittels eines Verfahrens gemäß dem Anspruch 1 gelöst.

Durch die Anwendung dieses Verfahrens ist es in vorteilhafter Weise möglich, sich beim Erstellen, Verändern und Bearbeiten eines NC-Programmes einen besseren Überblick über die momentane Position im Programm und über die Struktur des Programmes zu verschaffen. Dieser Vorteil kommt insbesondere im Umgang mit langen NC-Programmen zum Tragen.

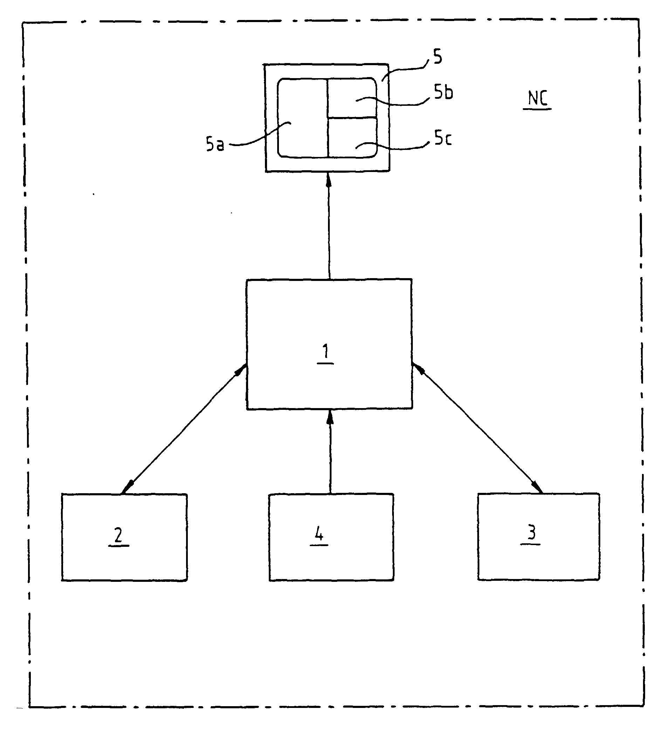

In der Figur sind die Kernbausteine einer NC-Steuerung dargestellt, mit der das erfindungsgemäße Verfahren durchgeführt werden kann.

Diese Kernbausteine sind eine Zentraleinheit 1, ein Speicher 2 für das NC-Programm, ein Arbeitsspeicher 3, z.B. für die allgemeine Gliederung der Programme, eine Tastatur 4 oder geeignete anderweitige externe Peripherie-Geräte sowie ein Bildschirm 5 mit mehreren Fenstern 5a, 5b, 5c.

Gegenstand der Erfindung ist ein Verfahren zur Gliederung eines NC-Programmes in einer beliebigen Programmiersprache in hierarchisch geordnete Gruppen von NC-Sätzen.

Das Verfahren beruht darauf, jeder als unter einem Gliederungspunkt zusammengehörigen Gruppe von NC-Sätzen einen speziellen NC-Satz voranzustellen, der den Beginn eines neuen Gliederungspunktes kennzeichnet und der einen erläuternden Kommentar, gleichsam als Überschrift dieses Gliederungspunktes, beinhaltet. Das Verfahren kann in der Weise fortgesetzt werden, daß mehrere so zusammengefaßte Gruppen wiederum durch Voranstellen eines speziellen Satzes zu einer Gruppe der nächsthöheren Hierarchie-Ebene zusammengefaßt werden. Die jeweilige Hierarchie-Ebene wird in diesem Satz als zusätzliches Kennzeichen angegeben. Auf diese Weise können hierarchisch übereinander angeordnete Gruppen gebildet werden, auf der höchsten Hierarchie-Ebene steht schließlich das gesamte NC-Programm (dessen Gliederungspunkt der Beginn-Satz des Programmes ist).

Der einen Gliederungspunkt kennzeichnende NC-Satz kann vorteilhaft so gestaltet werden, daß er in anderen NC-Steuerungen im Rahmen der Syntax der Programmiersprache als Kommentar interpretiert wird, in diesem Fall ist keine formale Erweiterung der Syntax notwendig.

Bei diesem Verfahren werden alle NC-Sätze hinter einem, einen Gliederungspunkt kennzeichnenden NC-Satz bis zum nächsten solchen Satz, der einen Gliederungspunkt derselben oder einer höheren hierarchischen Ebene kennzeichnet, als zu einer Gruppe und diesem Gliederungspunkt zugehörig betrachtet.

Die Vorteile des Verfahrens werden besonders deutlich, wenn das NC-Programm sowohl bei der Programmerstellung als auch bei der Programmbearbeitung in zwei oder mehreren Fenstern 5a, 5b, 5c gleichzeitig auf dem Bildschirm 5 dargestellt wird. Von diesen Bildschirmfenstern 5a, 5b, 5c enthält eines das gesamte NC-Programm als Folge von NC-Sätzen, während in dem oder den anderen Fenster(n) die Gliederung des Programmes in die gegebenen, hierarchisch geordneten Punkte angezeigt wird. Die hierarchischen Beziehungen zwischen den einzelnen Gliederungspunkten können dabei vorteilhaft in eine grafische Gestaltung umgesetzt werden (z.B. durch Einrückung, Unterstreichung, Darstellung als Diagramm, farbliche Gestaltung etc.). Dabei kann in einem Fenster wahlweise die gesamte Gliederung oder, ausgehend von der höchsten Hierarchie-Ebene, nur eine begrenzte Anzahl von Hierarchie-Ebenen dargestellt werden. Bei Bewegungen des Cursors innerhalb des NC-Programmes, sei es beim Editieren oder beim Bearbeiten, wird selbstverständlich in allen Fenstern der dargestellte Ausschnitt aus dem NC-Programm oder seiner Gliederung übereinstimmend in der Anzeige korrigiert.

Anstelle eines Bildschirmes mit zwei Fenstern ist in der folgenden Tabelle der Bildschirminhalt eines speziellen NC-Programmes aufgelistet, wobei allerdings nur ein kleiner Bereich des gesamten NC-Programmes willkürlich ausgewählt ist.

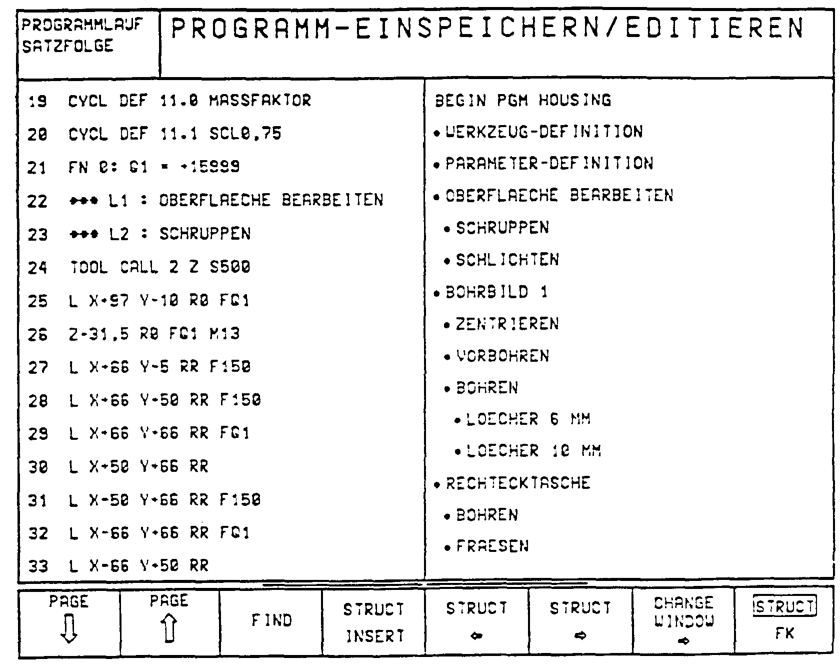

Wie aus der Darstellung ersichtlich ist, gibt es eine Gruppe von NC-Sätzen, die als Bearbeitungsverfahren unter dem Begriff "Schruppen" zusammengefaßt sind. Ferner gibt es eine Gruppe von NC-Sätzen, die als Bearbeitungsverfahren unter dem Begriff "Schlichten" zusammengefaßt sind.

Da diese Bearbeitungsverfahren sich auf die Bearbeitung von Oberflächen beziehen, sind sie unter der Überschrift "Oberfläche bearbeiten" zusammengefaßt und bilden einen Gliederungspunkt.

Das heißt, unter dem Gliederungspunkt "Oberfläche bearbeiten" befinden sich hierarchisch untergeordnet die Gruppen von zusammengefaßten NC-Sätzen mit den Überschriften "Schruppen" und "Schlichten" als erläuterndem Kommentar.

Ein weiteres Beispiel mit einer weiteren Hierarchie-Stufe läßt sich aus der Darstellung unter dem Gliederungspunkt mit der Überschrift "Bohrbild 1" entnehmen. Diese Gruppe mit der Überschrift "Bohrbild 1" ist hierarchisch gleichgestellt mit der Gruppe "Oberfläche bearbeiten".

Innerhalb der Gruppe "Bohrbild 1" sind dann - hierarchisch untergeordnet - die Gruppen von NC-Sätzen mit den Überschriften "Zentrieren"; "Vorbohren" und "Bohren" als untergeordnete Gliederungspunkte vorgesehen. Sie sind untereinander hierarchisch gleichrangig.

Innerhalb dieser Untergruppen gibt es dann im Gliederungspunkt "Bohren" nochmals hierarchisch untergeordnete Gruppen von NC-Sätzen, die als - unter sich gleichrangige - Gliederungspunkte mit den Überschriften "Löcher 6mm" und "Löcher 10mm" eingeordnet sind.

Bei diesem Beispiel wird der Vorteil der Erfindung besonders deutlich: Wenn die Bedienungsperson beispielsweise den Bearbeitungszyklus "Zentrieren" aufrufen will, muß sie nicht mühsam sämtliche NC-Sätze danach durchsuchen, sondern es reicht, am Bildschirm die Überschrift "Zentrieren" auszuwählen, beispielsweise durch "Anklicken" mit einem Cursor. Im linken Fenster des Bildschirmes erscheinen dann die NC-Sätze, die zum Zyklus "Zentrieren" gehören.

Wenn die Bedienungsperson jedoch bereits gezielt eine hierarchisch niedrigere Untergruppe aufrufen will, kann sie direkt den Gliederungspunkt "Löcher 10mm" anklicken und es erscheint die Gruppe von NC-Sätzen auf dem anderen Fenster des Bildschirmes, die sich auf das Bohren von Löchern mit 10mm Durchmesser beziehen.

Es ist ersichtlich, daß mit diesem Verfahren ein NC-Programm in beliebig feiner Weise gegliedert werden kann.

Das o.a. Verfahren kann sowohl bei der Erstellung neuer NC-Programme als auch zur nachträglichen Gliederung bereits vorhandener NC-Programme eingesetzt werden. Dabei kann bei der Erstellung neuer NC-Programme zuerst die Struktur des Programmes mit Hilfe von Gliederungspunkten festgelegt werden. Die NC-Sätze zu ihrer Kennzeichnung werden dabei automatisch in das Programm übernommen. Anschließend werden die einzelnen NC-Sätze innerhalb jedes Gliederungspunktes programmiert. Das nachträgliche Gliedern eines NC-Programmes erfolgt einfach durch Einfügen von Gliederungspunkte kennzeichnenden NC-Sätzen an der gewünschten Stelle.

In der Darstellung als Gliederung eines NC-Programmes wird ein neuer Gliederungspunkt automatisch immer am Ende des Gliederungspunktes, an dem sich der Cursor befindet, eingefügt, unabhängig davon, an welcher Stelle innerhalb des Gliederungspunktes sich der Cursor momentan genau befindet. Dies ist notwendig, um die hierarchischen Beziehungen momentan ausgeblendeter Teile der Gliederung bzw. des NC-Programme zueinander nicht zu verändern. Soll ein Gliederungspunkt an einer bestimmten Stelle innerhalb eines anderen Gliederungspunktes eingefügt werden, so muß diese Stelle in der Darstellung des gesamten NC-Programmes bezeichnet werden.

## Patentansprüche

1. Verfahren zum Erstellen, Ändern oder Bearbeiten eines NC-Programmes einer numerischen Steuerung, bei dem eine Folge von NC-Sätzen dieses NC-Programmes an einem Bildschirm (5) angezeigt wird, und mehrere aufeinanderfolgende NC-Sätze zu einer Gruppe und innerhalb dieser Gruppe jeweils mehrere aufeinanderfolgende NC-Sätze zu einer Untergruppe zusammengefaßt werden und jeder dieser Gruppe und Untergruppe von NC-Sätzen ein spezieller NC-Satz als Gliederungspunkt vorangestellt angezeigt wird, der einen erläuternden Kommentar als Überschrift enthält.

2. Verfahren nach Anspruch 1, dadurch gekennzeichnet, daß mehrere Gruppen von NC-Sätzen das gesamte NC-Programm bilden, und daß allen Gruppen ein spezieller NC-Satz vorangestellt angezeigt wird, welcher einen, das NC-Programm kennzeichnenden erläuternden Kommentar enthält.

3. Verfahren nach Anspruch 1, dadurch gekennzeichnet, daß jeder Gliederungspunkt ein Kennzeichen enthält, welches die Hierarchie-Ebene des Gliederungspunktes kennzeichnet.

4. Verfahren nach Anspruch 3, dadurch gekennzeichnet, daß in Abhängigkeit dieses Kennzeichens die hierarchischen Beziehungen zwischen den Gliederungspunkten in eine grafische Gestaltung umgesetzt werden, indem Gliederungspunkte unterschiedlicher Hierarchie voneinander unterscheidbar angezeigt werden.

5. Verfahren nach einem der vorhergehenden Ansprüche, dadurch gekennzeichnet, daß in einem ersten Fenster (5a) des Bildschirmes (5) zumindest ein Bereich des NC-Programmes als Folge von NC-Sätzen mit den zugeordneten Gliederungspunkten und gleichzeitig in einem zweiten Fenster (5b) des Bildschirmes (5) die Folge mehrerer Gliederungspunkte angezeigt wird.

6. Verfahren nach Anspruch 5, dadurch gekennzeichnet, daß die Gliederungspunkte der Gruppen von den Gliederungspunkten der Untergruppen durch unterschiedliche Einrückungen der Überschriften am Bildschirm (5) unterscheidbar angezeigt werden.

7. Verfahren nach Anspruch 5, dadurch gekennzeichnet, daß in dem zweiten Fenster (5b) aus der Folge der angezeigten Gliederungspunkte vom Bediener einer auswählbar ist, woraufhin im ersten Fenster (5a) die NC-Sätze angezeigt werden, welche diesem Gliederungspunkt untergeordnet sind.

## Claims

1. Method of creating, modifying or processing an NC program of a numerical control system, in which a sequence of NC sets of this NC program is displayed on a screen (5), and a plurality of successive NC sets are combined into a group and, within this group, a plurality of respective successive NC sets are combined into a subgroup, and a special NC set is displayed prefixed to each of these groups and sub-groups as a subdivision point, said special NC set containing an explanatory commentary as a headline.

2. Method according to claim 1, characterised in that a plurality of groups of NC sets form the entire NC program, and in that a special NC set is displayed, prefixed to all groups, said special NC set containing an explanatory commentary identifying the NC program.

3. Method according to claim 1, characterised in that each subdivision point contains an identifier which identifies the hierarchical plane of the subdivision point.

4. Method according to claim 3, characterised in that, in dependence on this identifier, the hierarchical relationships between the subdivision points are converted into a graphical configuration, prefixed subdivision points of differing hierarchy being displayed distinguishably from one another.

5. Method according to one of the preceding claims, characterised in that at least one area of the NC program is displayed in a first window (52) of the screen (5) as a sequence of NC sets with the associated subdivision points, and the sequence of a plurality of subdivision points is simultaneously displayed in a second window (5b) of the screen (5).

6. Method according to claim 5, characterised in that the subdivision points of the groups of the subdivision points of the sub-groups are displayed as distinguishable by differing combinations of the headlines on the screen (5).

7. Method according to claim 5, characterised in that one from the sequence of subdivision points displayed in the second window (5b) is selectable by the user, whereupon the NC sets subordinated to this subdivision point are displayed in the first window (5a).

## Revendications

1. Procédé pour élaborer, modifier ou exploiter un programme CN d'une commande numérique, selon lequel on affiche une suite d'articles CN du programme CN sur un écran (5), on regroupe plusieurs articles CN successifs pour former un groupe, à l'intérieur de ce groupe, on regroupe chaque fois plusieurs articles CN successifs pour former un sous-groupe et on affiche devant chacun de ces groupes et sous-groupes d'articles CN un article CN spécifique en tant que point de division, lequel article CN spécifique contient un commentaire descriptif comme titre.

2. Procédé selon la revendication 1, caractérisé par le fait que plusieurs groupes d'articles CN forment le programme CN complet et par le fait que l'on affiche un article CN spécifique devant tous les groupes, lequel article CN spécifique contient un commentaire qui caractérise et décrit le programme CN.

3. Procédé selon la revendication 1, caractérisé par le fait que chaque point de division contient un identificateur qui indique le niveau hiérarchique du point de division.

4. Procédé selon la revendication 3, caractérisé par le fait qu'en fonction de cet identificateur on transforme les relations hiérarchiques entre les points de division en un agencement graphique en affichant de manière différenciée les points de division appartenant à des niveaux hiérarchiques différents.

5. Procédé selon une des revendications précédentes, caractérisé par le fait que l'on affiche, dans une première fenêtre (5a) de l'écran (5), au moins une partie du programme CN en tant que suite d'articles CN avec les points de division correspondants et simultanément, dans une deuxième fenêtre (5b) de l'écran (5), la suite de plusieurs points de division.

6. Procédé selon la revendication 5, caractérisé par le fait que l'on affiche de manière différenciée les points de division des groupes et les points de division des sous-groupes, par des renfoncements différents des titres à l'écran (5).

7. Procédé selon la revendication 5, caractérisé par le fait que dans la fenêtre (5b) l'opérateur peut sélectionner un point de division dans la suite de points de division affichée, à la suite de quoi les articles CN dépendants de ce point de division sont affichés dans la première fenêtre (5a).
